# EUROPEAN PATENT SPECIFICATION

(11) **EP 3 977 087 B1**
(45) Date of publication and mention of the grant of the patent: **29.07.2026**
(21) Application number: 20813426.2
(22) Date of filing: 01.06.2020
(51) Int. Cl.: G07C 3/00, A01G 23/00, A01G 23/08

(54) **METHOD AND ARRANGEMENT IN THE CONDITION MONITORING OF GAPS AND LEAKS IN THE OPERATING DEVICES OF A POINT-CONTROLLED SET OF BOOMS IN A WORK MACHINE**
VERFAHREN UND ANORDNUNG ZUR ZUSTANDSÜBERWACHUNG VON SPALTEN UND LECKS IN DEN BETRIEBSGERÄTEN EINES PUNKTGESTEUERTEN AUSLEGERSATZES IN EINER ARBEITSMASCHINE
PROCÉDÉ ET AGENCEMENT DANS LA SURVEILLANCE DE CONDITION D'ÉCART ET DE FUITES DANS LES DISPOSITIFS DE FONCTIONNEMENT D'UN ENSEMBLE À POINT COMMANDÉ DE FLÈCHES DANS UNE MACHINE DE CHANTIER

(30) Priority: 31.05.2019 FI 20195455
(43) Date of publication of application: 06.04.2022
(73) Proprietor: Ponsse OYJ, 74200 Vieremä (FI)
(72) Inventor: AUVINEN, Toni, 74200 Vieremä (FI); HALONEN, Marko, 74200 Vieremä (FI)
(74) Representative: Kespat Oy
(86) International application number: PCT/FI2020/050377
(87) International publication number: WO 2020/240096

(56) References cited:
- EP-A2- 2 469 258
- WO-A1-2018/200696
- CN-A- 103 015 730
- FI-A1- 20 180 097
- JP-A- 2011 042 022
- JP-A- 2011 042 022
- US-A1- 2004 117 095
- US-A1- 2004 117 095
- US-A1- 2008 087 163
- US-A1- 2013 197 711

## Description

The invention relates to a method and a work machine in the condition monitoring of leaks in the operating devices of a point-controlled set of booms in a work machine, according to the preamble of claim 1 and 5, respectively.

Document US 2004/117095 A1 relates to a system and method for accurately determining a position of an implement arm of a work machine.

The set of booms includes operating devices for operating each part with the aid of a control system and the control system includes sensors measuring the relative position of each part relative to the previous one, starting from the base part, thus providing position data. A control command given by the operator as to the direction and speed of motion of the end of the set of booms is implemented using the speeds of motion measured by the sensors of the various booms of the set of booms. An important sub-area in the condition monitoring of a set of booms is the condition monitoring of its operating devices, because the main deviations arise in the operating devices due to leaks in the operating devices' hydraulic components. The set of booms' operating devices creep with age in any case.

In a rotation device, the movement of the piston or rotation motor only creates movement once the operating device has moved by the amount of backlash. In a set of booms, leaks in a hydraulic cylinder create continuous creep relative to time.

The term base part generally refers to the first part of the boom supported on a ring bearing, so that it also applies to a pillar-shaped base part.

The ring frame may be on a tiltable base. Here a rigid attachment refers to the ring frame not being able to rotate in the work machine.

The above factors can also be measured in as such known ways using various inertia measurement units (IMU) and devices, such as various MEMS sensors, in which an inclinometer and/or gyroscope can advantageously be included. In an inertia measurement unit, an inclinometer detects acceleration forces, including the Earth's gravity, relative to at least one and preferably three axes at right-angles to each other. Such an inclinometer arrangement determines its momentary position very precisely relative to the Earth's gravity, i.e. the gravity vector. In addition, the inertia measurement unit's gyroscope means determine the movement's/rotation's angle velocity and angular acceleration data. Such a gyroscope arrangement permits the piece's state of motion to be determined and these data can be utilized in determining the attitude and state of motion of individual booms of the set of booms and thus also in the control of the set of booms and the point of the set of booms. Definition of the angle attitude of the rotation device can also be included in the control of the set of booms and the point of the set of booms.

Such position calculation and control of the boom point is described, for example, in the following literature references:
- Björn Löfgren: Kinematic Control of Redundant Knuckle Booms, Licentiate thesis, Department of Machine Design, Royal Institute of Technology, Stockholm, 2004
- Björn Löfgren: Kinematic Control of Redundant Knuckle Booms with Automatic Path-Following Functions, Doctoral thesis, Department of Machine Design, Royal Institute of Technology, Stockholm, 2009
- Mikkel M. Pedersen, Michael R. Hansen, Morten Ballebye: Developing a Tool Point Control Scheme for a Hydraulic Crane Using Interactive Real-time Dynamic Simulation; Modelling, Identification and Control, Vol. 31, No. 4, 2010, pp. 133-143, ISSN 1890-1328
- https://wiki.metropolia.fi/display/sensor/Acceleration+sensors; Sakari Lukkarinen 19.5.2015

A point-controlled set of booms is never entirely stable, but even in new hydraulic cylinders minor leaks and backlash must be accepted as tolerance. This means that after some time the boom's point is not in the position calculated by software. The condition of the set of booms is monitored and at regular intervals the set of booms' co-ordinates are synchronized, so that during operation the position error of the set of booms' point is less than 20 cm in various co-ordinates. As the machine ages, or even earlier if some part malfunctions, the creep of the set of booms per unit of time increases. Because the machine operators' subjective estimates of the amount of creep per unit of time vary greatly, it is difficult to decide what the correct action would be in maintenance operations. Though regular compensation of backlash / creep is known, its link to condition monitoring has been limited.

The invention is intended to create an improvement in the said maintenance problem and to permit the objective monitoring of leaks . The invention's characteristic features are stated in the accompanying Claims. A service centre, which may be very far from the machine's site of operation, can now receive accurate data on the magnitude of creep. In the service centre, there is preferably a server apparatus for recording and processing the measurement values needed in long-term monitoring. Here the term service centre refers to an entity physically separate from the work machine, for example a service managing equipment, which monitors the service requirements or condition of the machine. In addition, the creep can be advantageously divided into sub-factors, so that a possibly faulty part can be defined beforehand. The relative increase in creep per unit of time is a sign of a more serious fault and this can now be easily detected using the method according to the invention. The same basic method can be used to monitor backlash in gears, when the moment of time t₂ is detected from the set of booms' start in the direction of rotation.

In forest machines, both the rotation device and the hoisting boom itself are subject to great stress. In the set of booms of a conventional forest machine, there are at most two folding booms and a possible multi-part telescopic boom (forwarder). The rotation device's mechanism and pinion racks and gearwheels wear, creating a clearly detectable gap. In cylinder operating devices, their spillover increases as a result of wear.

In a forwarder the set of booms' net moment, i.e. the value depicting its load capacity, is 100 - 200 kNm. In harvesters the net moment is 150 - 300 kNm. If the rotation device's great loading is also taken into account, in forest machines condition monitoring is very useful, as backlash in gears can increase very rapidly.

In the invention, the work machine's point-controlled boom positioning system can be utilized to a considerable extent. In addition, the control system is equipped with means for detecting when the machine is not moving, which detection can trigger a measurement period. At its simplest, two consecutive position detections between a selected period of time are compared to each other. The difference is compared to a preset criterion, giving as a result the state of the work machine. This either meets the criterion, or in a worse case the creep has really increased over the permitted limit.

Gap/creep values are collected in a memory, so that each creep value is compared to previous measurements and a possible deviating change detected.

As such, other types of sensor too can be used. For example, angle-sensors could be used in each pivot.

What is important however, is that momentary position data can be calculated for the boom's point or some other reference point, using the sensor and structure data.

The control device continuously calculates the booms' positions. By utilizing a so-called Jacobian matrix, the desired movement of the boom point is divided into parts for the various booms. The operator's control command to move the boom's point is implemented by dividing the control command into individual boom's movements to move the boom point according to the control command, using the booms' attitudes and states of movement as measured by the sensors. One technique is disclosed in application FI20135085, in which the direction and speed of movement of the set of booms are implemented using the speeds of movements of the various booms of the set of booms.

The machines' operating devices are hydraulically operated, particularly all the operating devices (cylinders) of the set of booms. Electrification is, however, progressing and in the future the sets of booms will at least partly operated by electricity, i.e. electrical operating devices will then be in use.

If it is wished to check for creep in a set of booms, the consecutive position data of the end point and possible other reference points are saved in the memory. A selected number of co-ordinates in a stable state saved at temporally regular intervals are them saved in the memory. Saving starts from the beginning, when movement of the set of booms is detected, when the previous reference point loses its significance. When measuring the gap in gearings, the time difference has, as such, no significance, because the absolute circumferential shift of the point of the boom tells the moment in time when the gap has ended. The gap in the toothing is obtained from the operating device's sensor as the distance travelled by a tooth, until the first tooth reaches the power-transmitting tooth. By using nearly the same monitoring operation, the hydraulic cylinders' leaks and gaps in the rotation device are obtained for the condition monitoring.

In one embodiment a trend value is calculated from the gap/creep values, and an alarm is given if the trend value rises over a set limit. Here trend means a temporal derivative. An increase in the trend's angular coefficient thus causes an alarm.
Figure 1 shows a set of point-controlled booms (forwarder)
Figure 2 shows another set of point-controlled booms (harvester)
Figure 3 shows the hydraulic and electrical control relating to the point-control of Figure 1
Figure 4 shows a flow diagram of the implementation of the condition monitoring
Figure 5 shows the point control's creep trend value in long-term monitoring.

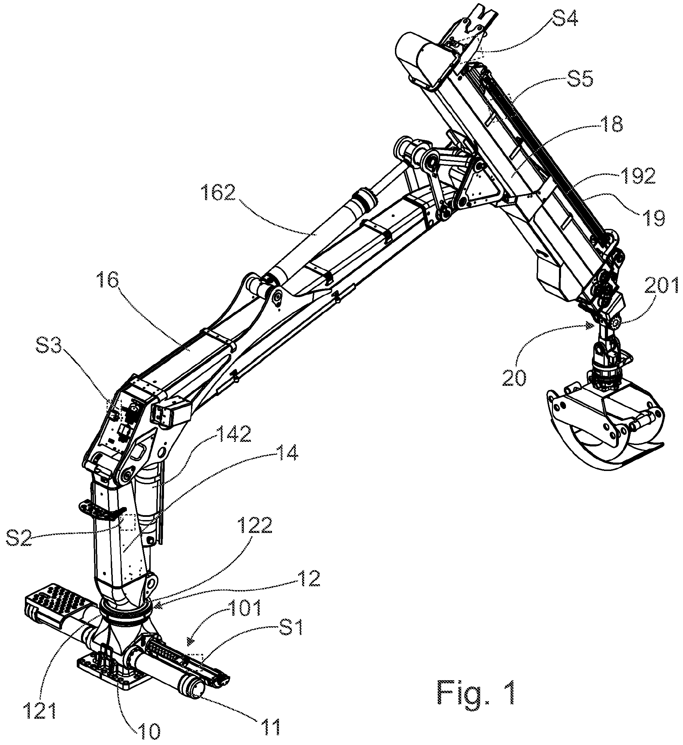

According to Figure 1, attached to the work machine is a base 10, in which is a rotation ring 12, in which there is, in turn, a lower 121 and upper 122 ring mounted in bearings relative to each other. The upper ring 122 is rotated by a rack mechanism 101 operated by hydraulic cylinders, in which there is a magnetostrictive linear sensor S1.

The hoist's pillar 14 is attached to the rotation ring's 12 upper part 122. A hoisting boom 16 is in turn pivoted to it, and then in turn a folding boom 18, in which is a telescopic extension 19. It has an operating device 192 schematically marked in the figure. A grab or harvester is attached to the pivot's 20 pin 201.

In the base 10 is an acceleration sensor S0. This is not entirely essential. Monitoring can take place in a set of co-ordinates according to the pillar 14. In the pillar 14 is a sensor S2, in the hoisting boom 16 a sensor S3, and in the folding boom a sensor S4, which are all also acceleration sensors. In the telescopic extension 182 is a magnetostrictive linear sensor S5. The control of the set of booms is monitored simultaneously. The set of booms' controlled immobility is then detected. When the set of booms moves due to a control signal, recording of the co-ordinates is started from the beginning. When controlled immobility is detected, two recorded co-ordinate values are compared temporally to each other. If the difference (Δ) is greater than a selected criterion, a creep alarm is made, which can mean, for example, an increase in the gap between the gearwheel and the pinion rack, or a leak in a hydraulic cylinder or other hydraulic-system component.

According to one embodiment, the measurement period is started manually. This is a clear operating instruction. The work machine's control may issue a reminder of this maintenance measure. This has the advantage of a very clear result, as the operator concentrates on the measurement, generally a few minutes being enough.

Alternatively, the measurement period is started automatically when the said stable state is detected. Because work is not interrupted, the measurement period starts again and again, until the work machine has been stationary for long enough.

The creep values are saved in the memory for long-term monitoring. For example, in weekly monitoring a deviating speed of change may be seen well beforehand, indicating a serious fault.

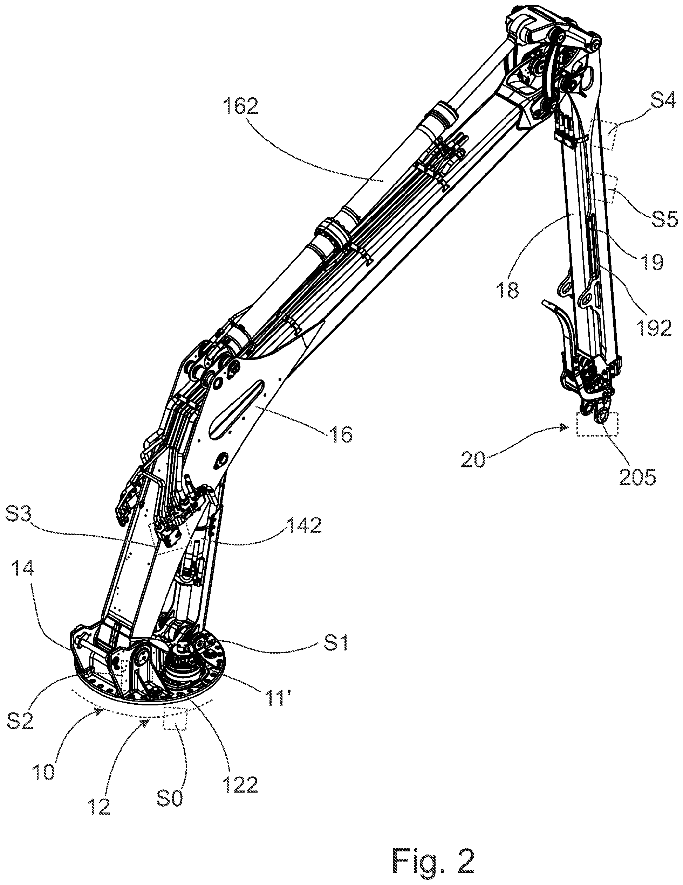

The set of booms of Figure 2 differs in its base from the structure in Figure 1. The upper part 122 of the rotation ring 12 is equipped with internal toothing and is rotated by a motor 101', which rotates a gearwheel against the internal toothing. Connected to the motor 101' is a rotation-angle sensor S1, which functionally corresponds to Figure 1's magnetostrictive sensor, i.e. it provides data on the rotation angle.

As such the sensor S0 is not essential. Comparison can be made either in pairs or relative to the pillar 14 (Figure 1) or the functionally corresponding lug 14'.

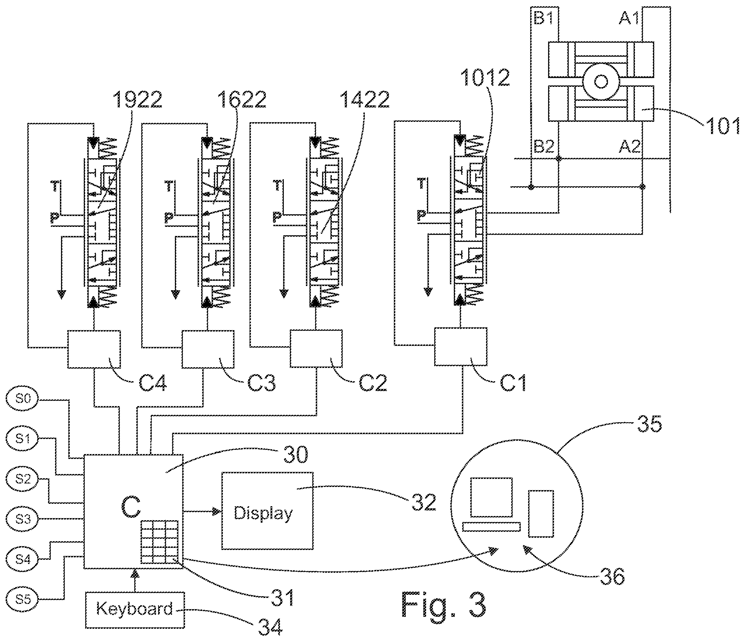

According to Figure 3, the cylinders 101, 142, 162, and 192 are operated by proportional valves 1012, 1422, 1622, and 1822. Electrical control takes place through ancillary control elements C1, C2, C3, and C4 from the control system C. This is actually part of the work machine's control system, but for clarity it is shown here as a separate part. The control system receives data from both the sensors S0 ... S5 and a keyboard 34 (or a graphical interface's cursor). The results are shown on the system's display 32. The data are preferably sent to the service centre's 35 server 36, which calculates the trend value from consecutive creep values and similarly from the gaps.

More specifically, operation takes place as follows.
- the position of the boom's point is saved
- the control system saves in its memory means the consecutive position co-ordinates of each sensor
   ∘ P1_t1, P1_t2, P1_t3... P1_tn
   ∘ P2_t1, P2_t2, P2_t3... P2_tn
   ∘ P3_t1, P3_t2, P3_t3... P3_tn
   ∘ ....
   ∘ Pn_t1, Pn_t2, Pn_t3... Pn_tn
- the control system monitors the gaps in such a way that
   - the measurement period starts with a stability condition, in which the control command is not performed and the measurement period is interrupted, if a control command appears,
   - when the control command is not performed and the measurement period is interrupted, if a control command appears,
   - the control system calculates the relative position At1 = At1 (P1_t1; P2_t1; P3_t1....Pn_t1) of one or more sensors relative to the first or any of the previous sensors at the moment in time t₁ using the measured sensor data,
   - the control system calculates the relative position At2= At2 (P1_t2; P2_t2; P3_t2;Pn_t2) of the corresponding sensors relative to each other at the moment in time t₂ using the measured sensor data,
   - the system calculates the difference in the relative positions of one or more sensors at selected consecutive moments in time, when the stability condition has been met, Δ = At2[] - At1[], and
   - the calculated Δ-value is shown to the operator.

The operations described above are implemented with the aid of software belonging to the control system.

The system can include a functionality, by which the set of booms is rotated manually from one extreme position to the other. The area of free movement depicts the size of the gaps. By saving these values and comparing them to previous values the enlargement of a gap can be detected.

The same inventive idea also contains a variation, in which the position sensors are used to detect a situation, in which a control command is given for rotation and it can be seen from the sensor's value that the cylinder or motor moves. Then follow the response from the hoisting boom or pillar's sensor to see when the set of booms begins to move. Thus a gap is detected by running a control command. The stability condition is then slightly different compared to the previous one, in which monitoring always starts only if a control command does not come.

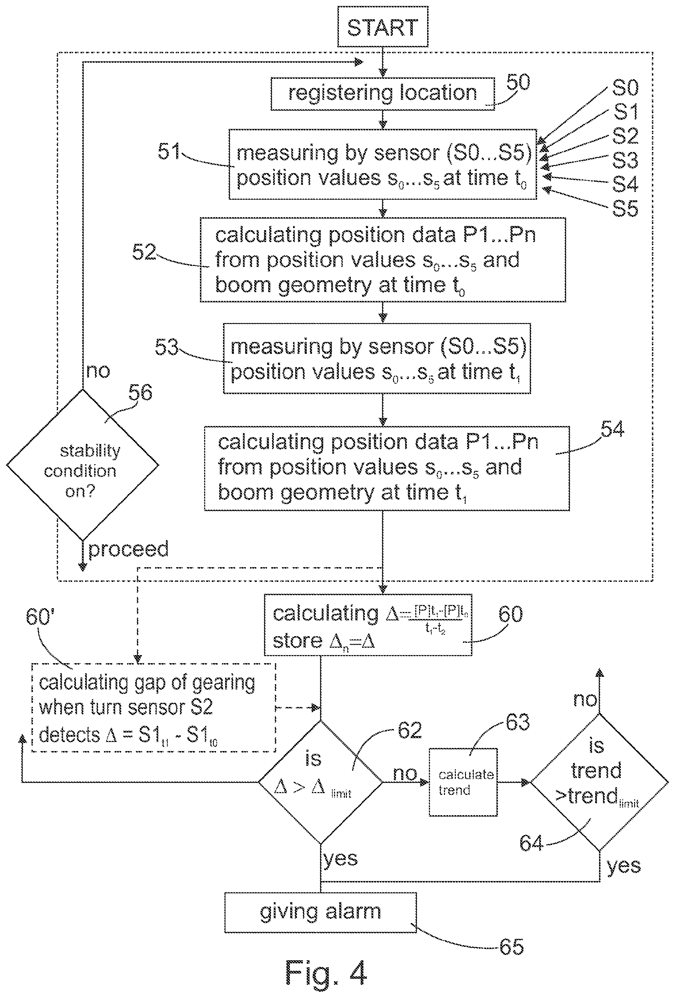

In Figure 4, monitoring starts when the work machine starts and then it is always on. Here, the period starts by registering the point's position (50). The operation can include a condition, according to which the point must be in a specific area farther away, i.e. the set of booms folded out, when creep will be detected more easily. The detected attitude values measured (51) from the sensors are saved in the memory register. From these, the position data (52) are calculated using the boom's geometry data, for example the position of the point at the moment t₀. The same is repeated at regular intervals, so that at the moment t₁ (5 s - 30 min from the previous one) new attitude values (53) are obtained and new position data (54). During service breaks etc., longer monitoring periods can be used and more precise information obtained. It will then be easier to decide the leak's location. During the machine's operation, critical changes can be detected over even short (5 - 30 s) periods.

The difference in the consecutive position data divided by the time interval is the creep value Δₜ₁, which is saved in the memory (60).

The creep value Δₜ₁ is compared to a first limit value Δ_{OK} (62), by which an alarm (65) is given if necessary.

If consecutive creep values Δₜₙ are saved in the memory, a trend (63) depicting the speed of change in creep can be calculated from them.

Condition monitoring of the gap in the rotation device's toothing takes place in otherwise the same way, except that instead of a moment in time t₁ the start of movement of the rotation is monitored. Sensor S2 detects, for example the start of movement and sensor S1 the gap (difference at moments t₁ and t₀).

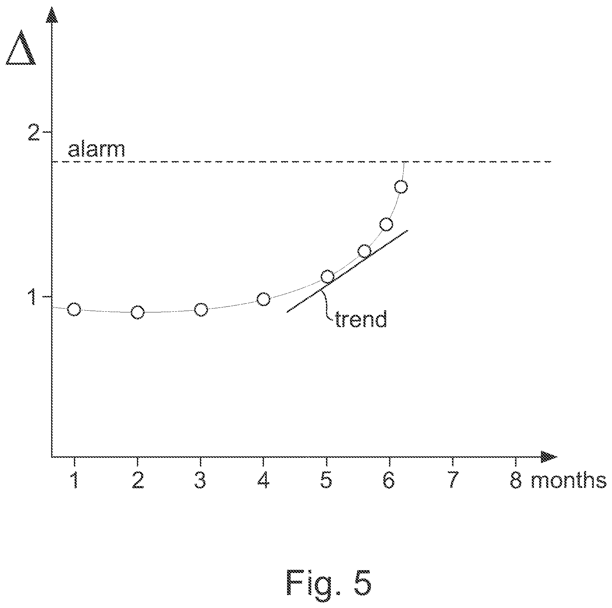

According to Figure 5, the trend value gives considerable added value in the long-term monitoring of the work machine. The trend, i.e. a measured derivative of the measured creep values, reveals to service operations a developing faultiness much earlier, possibly even before the local alarm limit is exceeded.

The same trend phenomenon as above, i.e. an accelerated increase indicating an approaching component failure, can be seen in the condition monitoring of the toothing.

## Claims

1. Method in the condition monitoring of gaps and leaks in the operating devices of a point-controlled set of booms in a work machine, using the work machine's control system, in which the set of booms comprises, as consecutive parts,
• a ring frame (10) to be attached rigidly to the work machine,
• a base part (14) of a hoist mounted rotatably in bearings on the ring frame,
• a first boom (16) pivoted to the base part (14),
• a second boom (18) pivoted to the first boom (16),
• a possible telescopic arrangement (182) in the second boom (18), and
• hydraulic operating devices (101, 142, 162, 182) for operating each consecutive part,
• sensors (S0....S5), wherein each sensor is located in each one of the consecutive parts of the set of booms and are arranged to measure acceleration, speed of movement and angle of rotation, and
• wherein the operating devices comprise hydraulic components having leaks and backlash,
• in which the work machine includes a control system (C) to control the operating devices with the aid of data supplied by the sensors (S0....S5), the control system (C) comprising processor means and memory means (31), as well as detection means (32), when
• the control system monitors the gaps and leaks in such a way that the measurement period is started by a selected stability condition in which a control command is not performed, and the measurement period is interrupted if a control command appears, and
• the position data P1(t), P2(t), P3(t),... Pn(t) of the parts of the set of booms are calculated from the attitude of the part and the state of movement at moment t₁ and are saved in the memory means,
**characterized in that**
• the control system saves in its memory means the consecutive position co-ordinates of each sensor
o P1_t1, P1_t2, P1_t3... P1_tn
o P2_t1, P2_t2, P2_t3... P2_tn
o P3_t1, P3_t2, P3_t3... P3_tn
∘ ....
o Pn_t1, Pn_t2, Pn_t3... Pn_tn , and
• the control system is used to calculate the relative position At1 = At1 (P1_t1; P2_t1; P3_t1....Pn_t1) of one or more sensors relative to the first or any of the previous sensors at a first moment t₁ in time, using the measured sensor data, and
• the control system is used to calculate the relative position of the corresponding sensors to each other At2= At2 (P1_t2; P2_t2; P3_t2;Pn_t2) at a moment in time t₂ during the measurement period, using the measured sensor data,
• the control system calculates the relative difference in position At2[] - At1[] of one or more sensors at selected consecutive moments in time, relative to the time difference, called as the Δ-value, when the stability condition has been met,
• the calculated Δ-value is shown to the operator,
• at least one reference position of the set of booms is selected, from which measurement is made,
• the difference in the consecutive position data divided by the time interval, called as the creep values, are saved in the memory for long-term monitoring,
• a trend value is calculated from the saved creep values and an alarm is made if the trend value exceeds a set limit or an alarm is given if the Δ-value is greater than a selected criterion.

2. Method according to Claim 1, **characterized in that** the measurement period is started manually.

3. Method according to Claim 1 or 2, **characterized in that** the measurement period is started automatically when the said stable state is detected.

4. Method according to Claim 1, **characterized in that** the work machine is a forest work machine, in the set of booms of which there are at most two folding booms and a possible folding telescopic boom.

5. Work machine having an arrangement in the condition monitoring of gaps and leaks of the operating devices of a point-controlled set of booms in a work machine, in which the set of booms comprises,
• as consecutive parts
o a ring frame (10) to be attached rigidly to the work machine,
o the base part (14, 14') of a hoist mounted rotatably in bearings in the ring frame (12),
o a first boom (16) pivoted to the base part,
o a second boom (18) pivoted to the first boom (16),
• a possible telescopic arrangement (19) in the second boom (18), and
• hydraulic operating devices (101, 142, 162, 192) to operate each consecutive part,
• sensors (S0....S5), wherein each sensor is located in each one of the consecutive parts of the set of booms and are arranged to measure acceleration, speed of motion and angle of rotation,
• wherein the operating devices comprise hydraulic components having leaks and backlash, and the arrangement includes
• a control system (C) to control the operating devices on the basis of the data provided by the sensors (S0....S5),
• the control system (C) is arranged to calculate position data P1(t), P2(t), P3(t),... Pn(t) on the positions of the parts of the set of booms from the movements of the parts, the control system comprising processor means and memory means, as well as detection means (32), and
• the control system (C) is arranged to convert a control command given by the operator into the direction and speed of movement of the point of the set of booms, **characterized in that**
• the control system is arranged to start a measurement period, when a selected stability condition appears, in which a control command is not performed, and the measurement period is interrupted if a control command appears,
• the control system is arranged to save in its memory means the consecutive position co-ordinates from each sensor
o P1_t1, P1_t2, P1_t3... P1_tn
o P2_t1, P2_t2, P2_t3... P2_tn
o P3_t1, P3_t2, P3_t3... P3_tn
∘ ....
o Pn_t1, Pn_t2, Pn_t3... Pn_tn,
• the control system is arranged to perform the monitoring of gaps and leaks in such a way **in that** it has means for identifying a stable state, when a control command is not performed and to interrupt a measurement period if a control command appears,
• the control system is arranged to use the system to calculate the relative positions At1 = At1 (P1_t1; P2_t1; P3_t1 ;Pn_t1) of one or more sensors relative to the first or any previous sensor at a first moment in time, using the measured sensor data,
• to calculate using the control system the relative position At2= At2 (P1_t2; P2_t2; P3_t2; Pn_t2) of the corresponding sensors at a second moment of time, using the measured sensor data,
• to calculate using the system the relative difference in position At2[] - At1[] of one or more sensors at selected moments of time relative to the time difference, called as the Δ-value, when the stability condition has been met, and
• the control system (C) is arranged to show by expression means the calculated Δ-value,
• the control system (C) is arranged to select at least one reference position of the set of booms, from which measurement is made,
• the arrangement includes memory means to save the difference in the consecutive position data divided by the time interval, called as the creep values, for long-term monitoring.
• the arrangement includes computation means to calculate a trend value from the creep values and to make an alarm if the trend value exceeds a set limit or if the Δ-value is greater than a selected criterion.

6. Work machine according to Claim 5, **characterized in that** the arrangement comprises a server (36) in the service centre (35) to save and process the measurement values required in long-term monitoring.

7. Work machine according to Claim 5 or 6, **characterized in that** the work machine is a forest work machine, in the set of booms of which there are at most two folding booms (14, 16) and a possible folding telescopic boom (18).

8. Work machine according to Claim 7, **characterized in that** the net moment of the set of booms of the forest work machine, i.e. the value depicting its loading capacity, is 100 - 200 kNm in a forwarder and 150 - 300 kNm in a harvester.

## Patentansprüche

1. Verfahren zur Zustandsüberwachung von Spalten und Lecks in den Betriebsgeräten eines punktgesteuerten Auslegersatzes einer Arbeitsmaschine, indem das Steuersystem der Arbeitsmaschine verwendet wird, wobei der Auslegersatz aufeinanderfolgende Teile umfasst,
• einen Ringrahmen (10), der starr an der Arbeitsmaschine zu befestigen ist,
• ein Basisteil (14) eines Hubwerks, das drehbar in Lagern am Ringrahmen gelagert ist,
• einen ersten Ausleger (16), der am Basisteil (14) angelenkt ist,
• einen zweiten Ausleger (18), der am ersten Ausleger (16) angelenkt ist,
• eine möglichen Teleskopanordnung (182) im zweiten Ausleger (18) und
• hydraulische Betriebsgeräte (101, 142, 162, 182) zum Betätigen jedes aufeinanderfolgenden Teils,
• Sensoren (S0....S5), wobei sich jeder Sensor in jedem der aufeinanderfolgenden Teile der Auslegeranordnung befindet und so ausgelegt ist, dass er Beschleunigung, Bewegungsgeschwindigkeit und Drehung misst, und
• wobei die Betriebsgeräte Hydraulikkomponenten umfassen, die Lecks und Spiel aufweisen,
• wobei die Arbeitsmaschine ein Steuersystem (C) einschließt, um die Betriebsgeräte mit Hilfe von Daten zu steuern, die von den Sensoren (S0....S5) geliefert werden, wobei das Steuersystem (C) Prozessormittel und Speichermittel (31) sowie Erfassungsmittel (32) einschließt, wenn
• das Steuersystem die Spalten und Lecks so überwacht, dass der Messzeitraum durch einen ausgewählten Stabilitätszustand ausgelöst wird, in dem kein Steuerbefehl ausgeführt wird, und der Messzeitraum unterbrochen wird, sobald ein Steuerbefehl auftritt, und
• die Positionsdaten P1(t), P2(t), P3(t), ... Pn(t) der Teile des Auslegersatzes aus der Lage des Teils und dem Bewegungszustand zum Zeitpunkt t₁ berechnet und in den Speichermitteln gespeichert werden,
**dadurch gekennzeichnet, dass**
• das Steuersystem in seinem Speicher die aufeinanderfolgenden Positionskoordinaten jedes Sensors
o P1_t1, P1_t2, P1_t3... P1_tn
o P2_t1, P2_t2, P2_t3 ... P2_tn
o P3_t1, P3_t2, P3_t3... P3_tn
∘ ....
o Pn_t1, Pn_t2, Pn_t3... Pn_tn speichert, und
• das Steuersystem die relative Position At1 = At1 (P1_t1; P2_t1;
P3_t1 .... Pn_t1) eines oder mehrerer Sensoren relativ zum ersten oder einem beliebigen der vorstehenden Sensoren zu einem ersten Zeitpunkt t₁ unter Verwendung der gemessenen Sensordaten, und
• das Steuersystem verwendet wird, um die relative Position der entsprechenden Sensoren zueinander zu berechnen At2= At2 (P1_t2; P2_t2; P3_t2;Pn_t2) zu einem Zeitpunkt t₂ während des Messzeitraums indem das Steuersystem die gemessenen Sensordaten verwendet,
• das Steuersystem die relative Positionsdifferenz At2[] - At1[] eines oder mehrerer Sensoren zu ausgewählten aufeinanderfolgenden Zeitpunkten relativ zu der Zeitdifferenz berechnet, die als Δ-Wert bezeichnet wird, wenn die Stabilitätsbedingung erfüllt ist,
• der berechnete Δ-Wert dem Bediener angezeigt wird,
• mindestens eine Referenzposition des Auslegersatzes ausgewählt wird, von der aus die Messung erfolgt,
• die Differenz der aufeinanderfolgenden Positionsdaten, geteilt durch das Zeitintervall, die sogenannten Kriechwerte, zur Langzeitüberwachung im Speicher abgelegt wird,
• aus den gespeicherten Kriechwerten ein Trendwert berechnet wird, und ein Alarm ausgelöst wird, wenn der Trendwert einen festgelegten Grenzwert überschreitet, oder es wird ein Alarm ausgelöst, wenn der Δ-Wert größer ist als ein ausgewähltes Kriterium.

2. Verfahren nach Anspruch 1, **dadurch gekennzeichnet, dass** der Messzeitraum manuell gestartet wird.

3. Verfahren nach Anspruch 1 oder 2, **dadurch gekennzeichnet, dass** der Messzeitraum automatisch gestartet wird, sobald der genannte stabile Zustand erkannt wird.

4. Verfahren nach Anspruch 1, **dadurch gekennzeichnet, dass** es sich bei der Arbeitsmaschine um eine Forstmaschine handelt, in deren Auslegersatz sich höchstens zwei Klappausleger und gegebenenfalls ein klappbarer Teleskopausleger befinden.

5. Arbeitsmaschine mit einer Anordnung zur Zustandsüberwachung von Spalten und Lecks der Betriebsgeräte eines punktgesteuerten Auslegersatzes in einer Arbeitsmaschine, wobei der Auslegersatz
• aufeinanderfolgende Teile umfasst,
o einen Ringrahmen (10), der starr an der Arbeitsmaschine zu befestigen ist,
o ein Basisteil (14, 14') eines Hubwerks, das drehbar in Lagern am Ringrahmen (12) gelagert ist,
o einen ersten Ausleger (16), der am Basisteil angelenkt ist,
o einen zweiten Ausleger (18), der am ersten Ausleger (16) angelenkt ist,
• eine möglichen Teleskopanordnung (19) im zweiten Ausleger (18) und
• hydraulische Betriebsgeräte (101, 142, 162, 192), um jedes aufeinanderfolgenden Teil zu betätigen,
• Sensoren (S0....S5), wobei sich jeder Sensor in jedem der aufeinanderfolgenden Teile der Auslegeranordnung befindet und so ausgelegt ist, dass er Beschleunigung, Beweggeschwindigkeit und Drehung misst,
• wobei die Betriebsgeräte Hydraulikkomponenten umfassen, die Lecks und Spiel aufweisen, und die Anordnung
• ein Steuersystem (C) zur Steuerung der Betriebsgeräte auf der Grundlage der von den Sensoren (S0....S5) gelieferten Daten einschließt,
• wobei das Steuersystem (C) so ausgelegt ist, dass es Positionsdaten P1(t), P2(t), P3(t),... Pn(t) über die Positionen der Teile des Auslegersatzes aus den Bewegungen der Teile berechnet, das Steuersystem umfassend Prozessor- und Speichermittel sowie Erfassungsmittel (32), und
• das Steuersystem (C) so ausgelegt ist, dass es einen vom Bediener gegebenen Steuerbefehl in die Bewegungsrichtung und -geschwindigkeit des Endpunkts des punktgesteuerten Auslegersatzes umwandelt, **dadurch gekennzeichnet, dass**
• das Steuersystem so ausgelegt ist, dass es einen Messzeitraum startet, wenn eine ausgewählte Stabilitätsbedingung eintritt, in der kein Steuerbefehl ausgeführt wird, und der Messzeitraum unterbrochen wird, wenn ein Steuerbefehl auftritt,
• das Steuersystem so ausgelegt ist, dass es in seinem Speicher die aufeinanderfolgenden Positionskoordinaten von jedem Sensor
o P1_t1, P1_t2, P1_t3... P1_tn
o P2_t1, P2_t2, P2_t3 ... P2_tn
o P3_t1, P3_t2, P3_t3... P3_tn
∘ ....
o Pn_t1, Pn_t2, Pn_t3... Pn_tn speichert,
• das Steuersystem so ausgelegt ist, dass es die Überwachung auf Spalten und Lecks derart durchführt, dass es über Mittel zur Erkennung eines stabilen Zustands verfügt, wenn kein Steuerbefehl ausgeführt wird, und einen Messzeitraum unterbricht, sobald ein Steuerbefehl auftritt,
• das Steuersystem so ausgelegt ist, dass es das System verwendet, um anhand der gemessenen Sensordaten die relativen Positionen At1 = At1 (P1_t1; P2_t1; P3_t1; Pn_t1) eines oder mehrerer Sensoren relativ zum ersten oder einem vorstehenden Sensor zu einem ersten Zeitpunkt zu berechnen,
• um mithilfe des Steuersystems die relative Position At2 = At2 (P1_t2; P2_t2; P3_t2; Pn_t2) der entsprechenden Sensoren zu einem zweiten Zeitpunkt unter Verwendung der gemessenen Sensordaten zu berechnen,
• um mithilfe des Systems die relative Positionsdifferenz At2[] - At1[] eines oder mehrerer Sensoren zu ausgewählten Zeitpunkten im Verhältnis zur Zeitdifferenz, dem sogenannten Δ-Wert, zu verwenden, wenn die Stabilitätsbedingung erfüllt ist, und
• das Steuersystem (C) ist so ausgelegt, dass es den berechneten Δ-Wert über einen Ausdruck anzeigt,
• das Steuersystem (C) ist so ausgelegt, dass es mindestens eine Referenzposition des Auslegersatzes auswählt, von der aus die Messung erfolgt,
• die Anordnung schließt Speichermittel ein, um die Differenz der aufeinanderfolgenden Positionsdaten zu speichern, geteilt durch das Zeitintervall, die als Kriechwerte bezeichnet werden, zum Zwecke der Langzeitüberwachung,
• die Anordnung schließt Rechenmittel, um aus den Kriechwerten einen Trendwert zu berechnen und einen Alarm auszulösen, wenn der Trendwert einen festgelegten Grenzwert überschreitet oder wenn der Δ-Wert größer ist als ein ausgewähltes Kriterium.

6. Arbeitsmaschine nach Anspruch 5, **dadurch gekennzeichnet, dass** die Anordnung einen Server (36) im Servicezentrum (35) umfasst, um die für die Langzeitüberwachung erforderlichen Messwerte zu speichern und zu verarbeiten.

7. Arbeitsmaschine nach Anspruch 5 oder 6, **dadurch gekennzeichnet, dass** es sich bei der Arbeitsmaschine um eine Forstmaschine handelt, in deren Auslegersatz sich höchstens zwei Klappausleger (14, 16) und gegebenenfalls ein klappbarer Teleskopausleger (18) befinden.

8. Arbeitsmaschine nach Anspruch 7, **dadurch gekennzeichnet, dass** das Nettomoment des Auslegersatzes der Forstmaschine, d. h. der Wert, der ihre Tragfähigkeit angibt, bei einem Vorlader 100-200 kNm und bei einem Holzvollernter 150-300 kNm beträgt.

## Revendications

1. Procédé dans la surveillance de condition d'espaces et de fuites dans les dispositifs de fonctionnement d'un ensemble à point commandé de flèches dans une machine de chantier, utilisant le système de commande de la machine de chantier, dans laquelle l'ensemble de flèches comprend, en tant que parties consécutives,
• un cadre secondaire (10) à fixer de manière rigide à la machine de chantier,
• une partie de base (14) d'un palan monté de manière pivotante dans des roulements sur le cadre secondaire,
• une première flèche (16) pivotant sur la partie de base (14),
• une deuxième flèche (18) pivotant sur la première flèche (16),
• un possible agencement télescopique (182) dans la deuxième flèche (18), et
• des dispositifs de fonctionnement hydrauliques (101, 142, 162, 182) pour actionner chaque partie consécutive,
• des capteurs (S0....S5), où chaque capteur est situé dans chacune des parties consécutives de l'ensemble de flèches, et est conçu pour mesurer l'accélération, la vitesse de mouvement et l'angle de rotation, et
• où les dispositifs de fonctionnement comprennent des composants hydrauliques présentant des fuites et du jeu,
• où la machine de chantier comprend un système de commande (C) pour commander les dispositifs de fonctionnement à l'aide des données fournies par les capteurs (S0....S5), le système de commande (C) comprenant des moyens de traitement et des moyens de mémorisation (31), ainsi que des moyens de détection (32), lorsque
• le système de commande surveille les espaces et les fuites de telle sorte que la période de mesure est déclenchée par une condition de stabilité sélectionnée dans laquelle une instruction de commande n'est pas exécutée, et la période de mesure est interrompue si une instruction de commande apparaît, et
• les données des positions P1(t), P2(t), P3(t),... Pn(t) des parties de l'ensemble de flèches sont calculées à partir de la position de la partie et de l'état du mouvement à l'instant t₁, et sont enregistrées dans les moyens de mémorisation,
**caractérisés en ce que**
• le système de commande enregistre dans ses moyens de mémorisation les coordonnées des positions consécutives de chaque capteur
o P1_t1, P1_t2, P1_t3... P1_tn
o P2_t1, P2_t2, P2_t3... P2_tn
o P3_t1, P3_t2, P3_t3... P3_tn
∘ ....
∘ Pn_t1, Pn_t2, Pn_t3... Pn_tn, et
• le système de commande est utilisé pour calculer la position relative At1 = At1 (P1_t1 ; P2_t1 ; P3_t1....Pn_t1) d'un ou de plusieurs capteurs par rapport au premier ou à l'un quelconque des capteurs précédents à un premier instant t₁, en utilisant les données mesurées par les capteurs, et
• le système de commande est utilisé pour calculer la position relative des capteurs correspondants les uns par rapport aux autres At2 = At2 (P1_t2 ; P2_t2 ; P3_t2 ; Pn_t2) à un instant t₂ de la période de mesure, en utilisant les données mesurées par les capteurs,
• le système de commande calcule la différence relative de position At2[] - At1[] d'un ou de plusieurs capteurs à des instants consécutifs sélectionnés dans le temps, par rapport à la différence de temps, appelée valeur Δ, lorsque la condition de stabilité est remplie,
• la valeur Δ calculée est présentée à l'opérateur,
• au moins une position de référence de l'ensemble de flèches est sélectionnée, à partir de laquelle la mesure est effectuée,
• la différence dans les données des positions consécutives divisée par l'intervalle de temps, appelée valeur de fluage, est enregistrée dans la mémoire à des fins de surveillance à long terme,
• une valeur de tendance est calculée à partir des valeurs de fluage enregistrées et une alarme est émise si la valeur de tendance dépasse une limite définie ou une alarme est émise si la valeur Δ est supérieure à un critère sélectionné.

2. Procédé conformément à la revendication 1, **caractérisé en ce que** la période de mesure est démarrée manuellement.

3. Procédé conformément à la revendication 1 ou 2, **caractérisé en ce que** la période de mesure démarre automatiquement lorsque ledit état stable est détecté.

4. Procédé conformément à la revendication 1, **caractérisé en ce que** la machine de chantier est une machine de chantier forestière, dont l'ensemble de flèches comporte au maximum deux flèches repliables et une possible flèche télescopique repliable.

5. Machine de chantier avec un agencement dans la surveillance de condition d'espaces et de fuites des dispositifs de fonctionnement d'un ensemble à point commandé de flèches dans une machine de chantier, dans laquelle l'ensemble de flèches comprend,
• en tant que parties consécutives
o un cadre secondaire (10) à fixer de manière rigide à la machine de chantier,
o la partie de base (14, 14') d'un palan monté de manière pivotante dans des roulements dans le cadre secondaire (12),
o une première flèche (16) pivotant sur la partie de base,
o une deuxième flèche (18) pivotant sur la première flèche (16),
• un possible agencement télescopique (19) dans la deuxième flèche (18), et
• des dispositifs de fonctionnement hydrauliques (101, 142, 162, 192) pour actionner chaque partie consécutive,
• des capteurs (S0....S5), où chaque capteur est situé dans chacune des parties consécutives de l'ensemble de flèches, et est conçu pour mesurer l'accélération, la vitesse de mouvement et l'angle de rotation,
• où les dispositifs de fonctionnement comprennent des composants hydrauliques présentant des fuites et du jeu, et l'agencement inclut
• un système de commande (C) pour commencer les dispositifs de fonctionnement d'après les données fournies par les capteurs (S0....S5),
• le système de commande (C) est conçu pour calculer les données des positions P1(t), P2(t), P3(t),... Pn(t) sur les positions des parties de l'ensemble de flèches à partir des mouvements des parties, le système de commande comprenant des moyens de traitement et des moyens de mémorisation, ainsi que des moyens de détection (32), et
• le système de commande (C) est conçu pour convertir une instruction de commande donnée par l'opérateur en direction et en vitesse de mouvement du point de l'ensemble de flèches, **caractérisé en ce que**
• le système de commande est conçu pour démarrer une période de mesure, lorsqu'une condition de stabilité sélectionnée apparaît, où une instruction de commande n'est pas exécutée, et la période de mesure est interrompue si une instruction de commande apparaît,
• le système de commande est conçu pour enregistrer dans ses moyens de mémorisation les coordonnées des positions consécutives de chaque capteur
o P1_t1, P1_t2, P1_t3... P1_tn
o P2_t1, P2_t2, P2_t3... P2_tn
o P3_t1, P3_t2, P3_t3... P3_tn
∘ ....
o Pn_t1, Pn_t2, Pn_t3... Pn_tn,
• le système de commande est conçu pour surveiller les espaces et les fuites de telle sorte qu'il dispose de moyens afin d'identifier un état stable, lorsqu'une instruction de commande n'est pas exécutée, et pour interrompre une période de mesure si une instruction de commande apparaît,
• le système de commande est conçu pour utiliser le système afin de calculer les positions relatives At1 = At1 (P1_t1 ; P2_t1 ; P3_t1 ; Pn_t1) d'un ou de plusieurs capteurs par rapport au premier ou à l'un quelconque des capteurs précédents à un premier instant, en utilisant les données mesurées par les capteurs,
• afin de calculer à l'aide du système de commande la position relative At2 = At2 (P1_t2 ; P2_t2 ; P3_t2 ; Pn_t2) des capteurs correspondants à un deuxième instant dans le temps, en utilisant les données mesurées par les capteurs,
• afin de calculer à l'aide du système la différence relative de position At2[] - At1[] d'un ou de plusieurs capteurs à des instants sélectionnés dans le temps, par rapport à la différence de temps, appelée valeur Δ, lorsque la condition de stabilité est remplie, et
• le système de commande (C) est conçu pour afficher par des moyens d'expression la valeur Δ calculée,
• le système de commande (C) est conçu pour sélectionner au moins une position de référence de l'ensemble de flèches, à partir de laquelle la mesure est effectuée,
• l'agencement inclut des moyens de mémorisation pour enregistrer la différence dans les données des positions consécutives divisée par l'intervalle de temps, appelée valeurs de fluage, à des fins de surveillance à long terme.
• l'agencement inclut des moyens de calcul pour calculer une valeur de tendance à partir des valeurs de fluage et pour émettre une alarme si la valeur de tendance dépasse une limite définie ou si la valeur Δ est supérieure à un critère sélectionné.

6. Machine de chantier conformément à la revendication 5, **caractérisée en ce que** l'agencement comprend un serveur (36) dans le centre de service (35) pour enregistrer et traiter les valeurs de mesure requises à des fins de surveillance à long terme.

7. Machine de chantier conformément à la revendication 5 ou 6, **caractérisée en ce que** la machine de chantier est une machine de chantier forestière, dont l'ensemble de flèches comporte au maximum deux flèches repliables (14, 16) et une possible flèche télescopique repliable (18).

8. Machine de chantier conformément à la revendication 7, **caractérisée en ce que** le moment net de l'ensemble de flèches de la machine de chantier forestière, c'est-à-dire la valeur décrivant sa capacité de chargement, est de 100 à 200 kNm pour un porteur et de 150 à 300 kNm pour une abatteuse-façonneuse.
